# EUROPEAN PATENT SPECIFICATION

(11) **EP 3 106 038 B1**
(45) Date of publication and mention of the grant of the patent: **18.05.2022**
(21) Application number: 15746122.9
(22) Date of filing: 10.02.2015
(51) Int. Cl.: A23L 7/10, A23L 5/00, A23L 7/157, A47J 47/01, A47J 47/04, A47G 19/32, B65D 83/06

(54) **CONTAINER COMPRISING PACKAGED WHEAT FLOUR**
BEHÄLTER MIT VERPACKTEM WEIZENMEHL
CONTENEUR COMPRENANT DE LA FARINE DE BLE

(30) Priority: 10.02.2014 JP 2014023462; 28.03.2014 WO PCT/JP2014/059084
(43) Date of publication of application: 21.12.2016
(73) Proprietor: Nisshin Seifun Welna Inc., Tokyo 101-8441 (JP)
(72) Inventor: YOSHIOKA, Yasuyuki, Tokyo 103-8544 (JP); OMURA, Masato, Tokyo 103-8544 (JP); SAKAKIBARA, Michihiro, Tokyo 103-8544 (JP)
(74) Representative: Schiener, Jens
(86) International application number: PCT/JP2015/053690
(87) International publication number: WO 2015/119294

(56) References cited:
- WO-A1-2012/057129
- FR-A- 1 133 420
- JP-A- H09 266 862
- JP-A- H11 332 719
- JP-A- S58 116 652
- JP-A- 2008 072 953
- JP-A- 2009 029 475
- JP-U- H0 448 179
- HEE-MOON KANG ET AL: "Physical Properties of Wheat Flour Treated by Supercritical Carbon Dioxide", 3RD INTERNATIONAL CONFERENCE ON BIOTECHNOLOGY AND FOOD SCIENCE (ICBFS 2012) ELSEVIER SCIENCE BV, SARA BURGERHARTSTRAAT 25, PO BOX 211, 1000 AE AMSTERDAM, NETHERLANDS SERIES : APCBEE PROCEDIA (ISSN 2212-6708(PRINT)), vol. 2, 1 June 2012 (2012-06-01), pages 27-31, XP55219732, Netherlands ISSN: 2212-6708, DOI: 10.1016/j.apcbee.2012.06.006
- A.B. Ward, J.A. Shellenberger, and D.L. Wetzel: "Particle Size and Particle Size Distribution of Wheat Samples Prepared with Different Grinders", Kansas State University, Manhattan, USA Cereal Chemistry, vol. Vol. 56, No. 5, 1979 9 April 1979 (1979-04-09), pages 434-436, XP002770803, Kansas, USA Retrieved from the Internet: URL:http://www.aaccnet.org/publications/cc /backissues/1979/Documents/Chem56_434.pdf [retrieved on 2017-06-02]
- KANG H. ET AL. PHYSICAL PROPERTIES OF WHEAT FLOUR TREATED BY SUPERCRITICAL CARBON DIOXIDE APCBEE PROCEDIA vol. 2, 2012, pages 27 - 31, XP055219732
- 'Bulk Density & Specific Gravity Chart', [Online] 2011, page 15, XP055219733 Retrieved from the Internet: <URL:http:// www. agonta.com/dwlds/bulk_dens_sp_gravity.pdf>
- TORU IMAI ET AL.: 'Classification of Various Wheat Flour with Granule Size Distribution' JOURNAL OF THE JAPANESE SOCIETY FOR FOOD SCIENCE AND TECHNOLOGY vol. 47, no. 1, 2000, pages 17 - 22, XP055219734

## Description

### [Technical Field]

The present invention relates to a container comprising packaged wheat flour, a method for applying a wheat flour, and a method of suppressing scattering and formation of lumps of a wheat flour.

### [Background Art]

Wheat flour is used not only as a material, for example, of breads, cakes, and noodles but also as a food coating for the purpose of, for example, absorbing water from the surface of a foodstuff to increase its cohesion with another foodstuff, reducing the stickiness of foodstuffs to prevent adhesion between the foodstuffs, or preventing loss of a savory taste (*umami*) or burning and sticking of a foodstuff during heating of the foodstuff.

Wheat flour is likely to scatter as dust, while their particles have a tendency to gather to form lumps. Hence, in an attempt to attach wheat flour to the entire foodstuff evenly, a technique has conventionally been used in which a large amount of wheat flour is spread on a chopping board or the like and then the foodstuff is rolled on it to attach the wheat flour to the surface of the foodstuff. However, this technique requires an excess amount of wheat flour relative to foodstuff and inevitably involves a problem of disposal of a large amount of wheat flour having failed to attach to the foodstuff, thus imposing cumbersome and wasteful procedures, particularly in households which use only a relatively small amount of foodstuffs. Additionally, the wheat flour having absorbed moisture from the foodstuff etc. in this technique may adhere to hands and thus make the hands so sticky that other procedures cannot be done.

Patent Literature 1 proposes wheat flour which is unlikely to scatter or form lumps of powder during procedures, the wheat flour comprising 90% or more of particles having a particle diameter of 150 µm or less and 20 cumulative volume% or less of particles having a particle diameter of 20 µm or less. Patent Literature 2 proposes a granulated composition for batter which is granulated by spraying a liquid containing an emulsifier onto a powder composition containing cereal flour. However, these also require the above-described technique when applied to foodstuffs and are not solutions to the problems of disposal and adhesion to hands.

WO 2012/057129 A1 discloses a cereal powder.

JP 2009/029475 A discloses a cap for a dispensing container.

Hee-Moon Kang et al. "Physical properties of Wheat Flour Treated by Supercritical Carbon Dioxide", 3rd international conference on biotechnology and food science, APCBEE PROCEDIA, vol. 2, 1 June 2012, pages 27-31 disclose physical properties of wheat flour.

### [Citation List]

### [Patent Literature]

[Patent Literature 1] JP-A-2001-000098
[Patent Literature 2] JP-A-2002-171924

### [Disclosure of the Invention]

### [Technical Problem]

When conventional wheat flour is attempted to be shaken out of a shaker-type container onto a foodstuff, the wheat flour forms lumps and gets stuck in shaker holes, thus failing to come out of the container. Increasing the size of the shaker holes allows a large amount of wheat flour to come out at one time, thus causing the wheat flour to be excessively applied onto a foodstuff as well as making the wheat flour more likely to scatter around the surroundings. The present inventors have conducted a detailed study with the goal of providing wheat flour which can be shaken out of a shaker-type container onto a foodstuff in small amounts with little scattering or lumping.

### [Solution to Problem]

As a result, the present inventors have found that when wheat flour having a predetermined angle of repose is packed in a container having one or more shaker holes having a predetermined size, the wheat flour can be shaken out in small and constant amounts evenly over a certain extent of area with little scattering.

The present invention relates to the subject matter of claims 1 to 10. That is, the present invention provides a container comprising packaged wheat flour, characterized in that the wheat flour is packed in a shaker-type container having 2 to 9 shaker holes having a maximum width of 3 to 12 mm, the wheat flour having an angle of repose of 40 to 51 degrees and a mean particle diameter of 40 to 250 µm.

The present invention also provides a method of applying wheat flour, comprising shaking out wheat flour through shaker holes to apply the wheat flour to an object, wherein the wheat flour is packed in a shaker-type container having 2 to 9 shaker holes having a maximum width of 3 to 12 mm, and the wheat flour has an angle of repose of 40 to 51 degrees and a mean particle diameter of 40 to 250 µm.

The present invention also provides a method of suppressing scattering and formation of lumps of wheat flour, comprising shaking out wheat flour through shaker holes to apply the wheat flour to an object, wherein the wheat flour is packed in a shaker-type container having 2 to 9 shaker holes having a maximum width of 3 to 12 mm, and the wheat flour has an angle of repose of 40 to 51 degrees and a mean particle diameter of 40 to 250 µm.

### [Advantageous Effects of Invention]

The packaged wheat flour of the present invention can be sprinkled lightly and evenly onto the surface of an object such as a foodstuff, without touching the wheat flour with hands directly. Furthermore, the wheat flour does not scatter over a wide area to soil the hands or surroundings when sprinkled onto an object. The packaged wheat flour of the present invention is unlikely to get stuck in the shaker holes; thus, a certain amount of the wheat flour can be shaken out of the container by gentle operation without repeated or vigorous shaking of the container. With the packaged wheat flour, cooking involving the use of wheat flour can be made simpler and more economical.

### [Description of Embodiments]

The packaged wheat flour is packed in a shaker-type container having 2 to 9 shaker holes having a maximum width of 3 to 12 mm and is shaken out through the shaker holes of the container so as to apply the wheat flour to (e.g., sprinkled onto or dredged over) an object in small amounts. The term "shake" as defined in the present invention is not limited to an operation of giving a shake by directing an opening portion of the container downward, and also encompasses, for example, an operation of directing an opening portion of the container vertically downward, an operation of tilting the container, and an operation of giving a shake by inverting and inclining the container. Examples of the object to which the packaged wheat flour is applied include, but are not limited to, foodstuffs and cooking utensils such as pans, baking sheets, chopping boards, and plates. The use of the packaged wheat flour can avoid scattering or forming lumps of wheat flour when the wheat flour is applied to, particularly sprinkled onto or dredged over, an object in the manner as described above.

Preferably, the packaged wheat flour can be used when wheat flour is applied as a cooking ingredient to a foodstuff or a cooking utensil. For example, the packaged wheat flour can be used in cases when a small amount of wheat flour is attached to a foodstuff for flouring in making a sautéed food such as meuniere or as a coating ingredient of a deep-fried food such as *karaage* or fried food; when a small amount of wheat flour is attached to a cooking utensil for flouring in order to prevent adhesion of bakery dough or noodle dough; or when a small amount of wheat flour is added to a foodstuff for thickening food.

Wheat as a material of the wheat flour used in the packaged wheat flour may be one belonging to any of strains such as hard wheat, soft wheat, medium-hard wheat, hexaploid wheat, and durum wheat, and may be of any variety belonging to any of those strains. The examples include, but are not limited to: hard wheat such as Canadian western red spring (CW), American dark northern spring (DNS), hard red winter (HRW), and Australian prime hard (PH); Japanese hexaploid wheat; medium-hard wheat such as Australian standard white (ASW); soft wheat such as American western white (WW); and durum wheat. Among the above wheats, any one variety or strain may be used alone or two or more different varieties or strains may be used in combination. The wheat flour used in the present invention may be wheat flour obtained by milling such wheat as mentioned above, and may be any one of hard wheat flour, semi-hard wheat flour, moderate wheat flour, soft wheat flour, and durum flour or a mixture thereof. Soft wheat flour is preferred.

The wheat flour used in the present invention may be granulated wheat flour. The granulated wheat flour may contain a powder material other than such wheat flour mentioned above, and examples of the powder material include cereal flour other than wheat flour; starch; a saccharide; an excipient; and a dye powder. However, it is more preferable for the granulated wheat flour to have a lower content of the other powder material such that the granulated wheat flour can maintain the properties intrinsic to wheat flour and be easily used in the same applications as conventional wheat flour. Thus, the content of the other powder material in the granulated wheat flour (calculated as dry matter) is preferably less than 5 mass% of the total raw material flours including the wheat flour and the other powder material. More preferably, the granulated wheat flour contains no powder material other than the wheat flour. In other words, the content of the wheat flour in the granulated wheat flour (calculated as dry matter) is preferably more than 95 mass%, more preferably 100 mass%.

The granulated wheat flour can be produced by adding water to a raw material flour containing wheat flour and granulating the raw material flour. It is preferable that the granulation be performed under a non-thermal condition. The non-thermal condition as defined herein refers to a temperature condition which keeps the degree of gelatinization of the raw material flour from increasing by 5% or more during the granulation process. Assuming, for example, that the raw material flour is wheat flour having a degree of gelatinization of 6% before granulation, the wheat flour granulated under the non-thermal condition has a degree of gelatinization of less than 11% after granulation. Such a non-thermal condition can be, for example, a condition in which external heating using a heating means is not performed or the time of heating is short during the granulation process so that the gelatinization of the raw material flour is hardly caused. Alternatively, for example, the non-thermal condition can be a condition in which external heating using heating means is not performed or the time of the heating is short during the granulation process and the heat internally generated during the granulation process is small so that the gelatinization of the raw material flour is hardly caused. As defined herein, the degree of gelatinization of the raw material flour is a value measured by β-amylase-pullulanase method which is a conventional method.

The method for preparing the granulated wheat flour used in the present invention is not particularly limited, and methods such as tumbling granulation, fluidized-bed granulation, and stirring granulation can be employed. Preferred is a method which can create the above non-thermal condition. Examples of the granulation process include, but are not limited to: a process in which granulation is accomplished by stirring raw material flour containing such wheat flour as described above using a vertical mixer while adding water gradually; and a process in which granulation is accomplished by stirring and transferring the raw material flour using a feeder-type horizontal mixer while adding water with a spray device or the like during the transfer so as to simultaneously perform mixing and transfer. In view of convenience, stirring granulation is preferred. Any of the granulation methods mentioned above can be carried out using a commercially-available granulator. The granulated wheat flour can be subjected to a particle-size regulation process or a drying process after granulation as necessary. These processes are also preferably performed under a condition which keeps the degree of gelatinization from increasing by 5% or more from that of the raw material flour.

The wheat flour used in the present invention may be non-granulated wheat flour which is not subjected to granulation after milling, may be granulated wheat flour, or may be a mixture of them. Alternatively, classified flour obtained by subjecting the above wheat flour to classification may be used. The term "wheat flour" as used in the following description is intended to encompass both non-granulated wheat flour and granulated wheat flour, unless otherwise distinguished.

The wheat flour used in the present invention has an angle of repose of 40 degrees or more and 51 degrees or less, more preferably 50 degrees or less. For example, the angle of repose of the wheat flour used in the present invention can be in the range of 40 to 51 degrees or 40 to 50 degrees. When the angle of repose of wheat flour is less than 25 degrees, a large amount of the wheat flour is shaken out of the container in one shaking-out operation, and thus the wheat flour is excessively sprinkled onto an object or unnecessarily consumed, leading to reduced economic efficiency, in addition to which the wheat flour scatters or bounces off a chopping board or a work surface, thus spreading around and soiling the surroundings. When the angle of repose of wheat flour is more than 54 degrees, the amount of the wheat flour shaken out of the container is excessively small, in addition to which the wheat flour is likely to get stuck in the shaker holes. The angle of repose of typical wheat flour such as soft wheat flour and hard wheat flour is about 56 degrees to 58 degrees. The angle of repose of wheat flour as defined herein is a value measured according to JIS R 9301-2-2 (Alumina powder-Part 2: Determination of physical properties-2: Angle of repose) .

An example of the method for adjusting the angle of repose of wheat flour to the above range is a method in which wheat flour is subjected to a classification or the like to adjust the particle diameter or the particle size distribution and a portion of the wheat flour is selectively collected so that the collected wheat flour has an angle of repose within the predetermined range. Another example of the method for adjusting the angle of repose of wheat flour is a method in which wheat flour is modified by altering the surface properties so that the angle of repose falls within the above range. Examples of the method for altering the surface properties of wheat flour include: mixing of an excipient into wheat flour; and granulation of wheat flour. Additionally, wheat flour with altered surface properties may be used after the particle diameter or the particle size distribution is adjusted by the method as described above. Alternatively, wheat flours obtained by the above classification or modification may be mixed together as appropriate, or they may further be mixed with typical wheat flour, to prepare wheat flour having the desired angle of repose. However, in view of increasing the homogeneity of the wheat flour to improve its quality as a cooking ingredient or stability during the shaking-out operation, it is preferable that modified wheat flour obtained by altering the surface properties of wheat flour be used alone.

A preferred example of the wheat flour used in the present invention is granulated wheat flour obtained by subjecting 100 parts by mass of raw material flour containing 95 mass% or more of wheat flour to stirring granulation performed under the non-thermal condition described above while adding 25 to 40 parts by mass of water and by optionally further subjecting the granulated flour to particle-size regulation and drying, the granulated wheat flour containing 30 to 80 volume%, preferably 35 to 65 volume%, of flour with a particle diameter of less than 150 µm and 70 to 20 volume% of flour with a particle diameter of 150 µm or more. Herein, the particle diameters of the granulated wheat flour are particle diameters calculated by laser diffraction-scattering method.

Additionally, the wheat flour used in the present invention has a mean particle diameter of 40 to 250 µm, preferably 40 to 200 µm, in view of further reducing scattering of the wheat flour shaken out of the container. The mean particle diameter of the wheat flour as defined herein is a mean volume diameter (MV) based on particle diameters calculated by laser diffraction-scattering method.

The wheat flour used in the present invention may, depending on its intended use, be mixed with another powder material and thus provided in the form of a wheat flour composition. Examples of the other powder material include: typical wheat flour such as hard wheat flour, semi-hard wheat flour, moderate wheat flour, soft wheat flour, and durum flour; cereal flour other than wheat flour such as rye flour, rice flour, corn flour, barley flour, and bean flour; starch such as tapioca starch, potato starch, corn starch, waxy corn starch, and wheat starch; processed starch such as pregelatinized, etherified, esterified, acetylated, and cross-linked products of the above starches; a saccharide; egg powder; egg white powder; a thickener; fat and oil; an emulsifier; an excipient; a fluidizer; seasoning; a spice; activated gluten; and an enzyme additive. The amount of the wheat flour with the predetermined angle of repose used in the present invention differs depending on factors such as the intended use and production cost of the wheat flour composition, but is preferably 40 mass% or more, more preferably 50 mass% or more, even more preferably 60 mass% or more. It is preferable that the angle of repose of the wheat flour composition be within the above predetermined range.

According to the present invention, the wheat flour or the wheat flour composition is provided in the form of being packed in a shaker-type container having 2 to 9 shaker holes. The shaker-type container may be a container having a size and shape which allow it to be held with one hand for the operation of shaking out the wheat flour packed therein. For example, a container having a size and shape like those of cruets for seasonings and spices is preferred. To be more specific, the shaker-type container is preferably a self-supporting container in the shape of a cylindrical column, an elliptical column, or a prismatic column with a diameter or a length of one side of the base of about 20 to 100 mm and a height of about 80 to 200 mm and having a size which allows about 50 to 300 g of the wheat flour to be packed. The material of the container is not particularly limited as long as the material allows preservation of the wheat flour and does not deform during the shaking-out operation. Examples of the material include plastics, metals, and paper.

The shape of the 2 to 9 shaker holes of the shaker-type container is not particularly limited, and examples thereof include circles, triangles, rectangles, and other polygons. The size of each of the 2 to 9 shaker holes is such that its maximum width is 3 to 12 mm, more preferably 4 to 8 mm. The number of the shaker holes is 2 to 9, more preferably 4 to 7. When the size of the shaker holes is too small or when the number of the holes is small, the shaken-out amount is likely to be too small or the holes are likely to be clogged with the wheat flour. On the other hand, when the size of the shaker holes is too large or when the number of the holes is large, a large amount of the wheat flour is shaken out of the container in one shaking-out operation, and thus the wheat flour is excessively sprinkled onto an object or unnecessarily consumed, leading to reduced economic efficiency, in addition to which the wheat flour is likely to scatter and soil the surroundings. The shaker-type container used in the present invention preferably has 2 to 9 shaker holes in the shape of a circle with a diameter of 3 to 12 mm, more preferably has 4 to 7 shaker holes in the shape of a circle with a diameter of 3 to 12 mm, even more preferably has 4 to 7 shaker holes in the shape of a circle with a diameter of 4 to 8 mm. Alternatively, the shaker-type container used in the present invention preferably has 2 to 9 shaker holes approximately in the shape of a rectangle or another polygon with a diagonal length of 3 to 12 mm, more preferably has 4 to 7 shaker holes approximately in the shape of a rectangle or another polygon with a diagonal length of 3 to 12 mm, even more preferably has 4 to 7 shaker holes approximately in the shape of a rectangle or another polygon with a diagonal length of 4 to 8 mm.

The shaker-type container may further include a spooning opening in addition to the one or more shaker holes. The spooning opening can be used as an opening through which the wheat flour is taken out of the container with a measuring spoon, a tea spoon, or the like or through which a relatively large amount of the wheat flour is shaken out of the container. In the shaker-type container, the spooning opening is preferably located at a distance from the one or more shaker holes. For example, the shaker holes may be arranged at one end of the top face of the shaker-type container while the spooning opening may be provided at a point 90 to 180° away from the shaker holes in the top face.

The 2 to 9 shaker holes and the spooning opening of the shaker-type container are preferably covered with a lid. The type of the lid is not particularly limited. A lid easily openable/closable with one hand, such as a sliding lid or flap lid, is preferred. The lid for the shaker holes is preferably a single lid capable of opening/closing a plurality of shaker holes together. The lid for the 2 to 9 shaker holes and the lid for the spooning opening may be one shared lid or may be separate, distinct lids. In either case, it is preferable for the lid(s) to be configured to avoid simultaneous opening of the one or more shaker holes and the spooning opening. For example, the lid for the 2 to 9 shaker holes and the lid for the spooning opening are two flap lids openable/closable independently of each other. Alternatively, the lid for the 2 to 9 shaker holes and the lid for the spooning opening are one shared sliding lid that moves to close at least either the shaker holes or the spooning opening.

It is preferable that, when the packaged wheat flour is shaken out of the container by performing once the shaking-out operation of directing the opening portion of the container vertically downward, the wheat flour can be shaken out in an amount suitable for flouring an ingredient such as meat or fish. The suitable amount is, for example, about 0.5 g to 2 g, preferably about 0.8 to 1.4 g. It is also preferable that, when the packaged wheat flour is shaken out of the container toward a target point on a plane located 10 cm downward by performing the above shaking-out operation once, the wheat flour can be distributed over a suitable extent of area for flouring an ingredient such as meat or fish. The area is, for example, a limited area extending to a maximum width of about 8 to 25 cm, preferably to a maximum width of about 10 cm to 20 cm, with the target point defined as the center of the area. If it is desired to shake a larger amount of the wheat flour out of the container or distribute the wheat flour over a broader area, the above shaking-out operation may be repeated or may be performed more vigorously.

### [Examples]

Next, examples will be given to describe the present invention in more detail. It should be noted that the present invention is not limited only to the examples given below.

Production Examples 1 to 10: Packaged wheat flours 1 kg of commercially-available wheat flour (soft wheat flour, "Flour", manufactured by Nisshin Flour Milling Inc. and having a mean particle diameter of 54 µm) was put in a container and stirred with a hand mixer while adding water from a spray, which was followed by drying in a thermostatic chamber. Wheat flours having angles of repose shown in Table 1 were produced by varying the conditions such as the amount of added water, the temperature during stirring, and the drying time. The respective mean particle diameters of the obtained wheat flours ranged from about 50 to 190 µm. The mean particle diameters were mean volume diameters (MV) based on particle diameters measured by laser diffraction-scattering method using Microtrac MT3000II (NIKKISO CO., LTD.). A cylindrical container with a diameter of 50 mm and a height of 120 mm was packed with 100 g of each wheat flour, and then a circular plastic plate having a diameter of 50 mm and a thickness of 0.2 mm and having five shaker holes of 5 mm diameter was fitted to the top of the container. In this way, shaker-packaged wheat flours were produced.

### Production Examples 11 to 13: Packaged wheat flours

An amount of 1 kg of a raw material wheat flour (soft wheat flour, "Flour", manufactured by Nisshin Flour Milling Inc. and having a mean particle diameter of 54 µm) was put in a container and stirred with a hand mixer while adding water from a spray, which was followed by drying in a thermostatic chamber. In this way, wheat flour having an angle of repose of 35.2 degrees was produced. This wheat flour was mixed with raw material wheat flour (angle of repose: 56.3 degrees) as appropriate to produce wheat flours having angles of repose shown in Table 1. Shaker-packaged wheat flours were produced using these wheat flours in the same manner as in Production Examples 1 to 10.

### Test Example 1: Measurement of shaken-out amount and scattering distance

Each of the packaged wheat flours of Production Examples 1 to 13 was shaken out onto a smooth, flat surface placed horizontally. The shaking-out was done at a height of 10 cm directly above a mark provided at the center of the flat surface by performing once the operation of directing the opening portion of the container vertically downward toward the mark. The amount of the wheat flour shaken out was measured as the shaken-out amount. The area over which the shaken-out wheat flour was distributed was defined, the lengths of straight lines each extending from a point on one outer edge of the area to another edge through the mark were measured, and the maximum of the lengths was employed as the scattering distance. The measurement was conducted 10 times for each wheat flour, and the average values of the shaken-out amount and scattering distance were determined and evaluated by three ratings, A, B, and C according to the criteria listed below. In addition, the uniformity of distribution of the shaken-out wheat flour was evaluated. For the distribution uniformity, the wheat flour shaken out of the container by the same operation as above was visually observed, and the distribution of the shaken-out wheat flour was evaluated by four ratings, A, B, C, and D according to the criteria listed below. The evaluation was performed three times. When the same score was obtained twice or more, the score was adopted as an evaluation result for the distribution uniformity. When all the three times of evaluation yielded different scores, the distribution uniformity was determined to be unevaluable.

### Shaken-out amount:

A 0.8 to 1.4 g
B 0.5 or more and less than 0.8 or more than 1.4 g and 2 g or less
C less than 0.5 g or more than 2 g

### Scattering distance:

A 10 to 20 cm
B 8 cm or more and less than 10 cm or more than 20 cm and 25 cm or less
C less than 8 cm and more than 25 cm

### Distribution uniformity:

A Substantially uniform and almost no unevenness.
B Slightly uneven.
C Significantly uneven.
D Significantly uneven, and there are some portions where the wheat flour is not at all distributed or distributed in lumps.

The results are shown in Table 1. A result obtained for commercially-available wheat flour ("Flour" manufactured by Nisshin Flour Milling Inc.) is shown as a reference example.

**[Table 1]**

| | Production Examples | | | | | | | | | | | | | Reference Example |
|---|---|---|---|---|---|---|---|---|---|---|---|---|---|---|
| | 1 | 2 | 3 | 4 | 5 | 6 | 7 | 8 | 9 | 10 | 11 | 12 | 13 | |
| Angle of repose (degrees) | 24.1 | 25.3 | 35.2 | 36.6 | 40.1 | 46.1 | 48.0 | 49.2 | 50.4 | 53.8 | 44.2 | 50.9 | 54.2 | 56.3 |
| Shaken-out amount (g) | 3.6 (C) | 2.0 (B) | 1.7 (B) | 1.5 (B) | 1.2 (A) | 1.0 (A) | 0.9 (A) | 0.8 (A) | 0.7 (B) | 0.6 (B) | 0.7 (B) | 0.5 (B) | 0.3 (C) | 0 (C) |
| Scattering distance (cm) | 25.4 (C) | 19.7 (A) | 14.6 (A) | 13.9 (A) | 14.0 (A) | 12.7 (A) | 11.8 (A) | 11.9 (A) | 11.5 (A) | 10.8 (A) | 12.2 (A) | 10.6 (A) | 7.2 (C) | 0 (C) |
| Distribution uniformity | C | B | A | A | A | A | A | A | A | B | A | B | B | D |

### Production Examples 1 to 4 and 10 to 13 are Comparative Examples.

For the cases of using wheat flour by shaking out it of a container, it was found, as shown in Table 1, that when the angle of repose of the wheat flour becomes small, the shaken-out amount becomes large, the wheat flour scatters more easily, and the uniformity of distribution of the shaken-out wheat flour is reduced. It was also found that when the angle of repose of the wheat flour becomes larger, the shaken-out amount and the scattering distance becomes small, the shaker holes are more likely to be clogged, and thus it becomes difficult to shake out the wheat flour. The result of this test revealed that the angle of repose of wheat flour is preferably about 25 to 54 degrees in order that the wheat flour may, without clogging shaker holes, be shaken out of a container in a suitable amount over a suitable extent of area to flour a typical foodstuff. For the packaged wheat flours having such an angle of repose (Production Examples 2 to 12), the shaken-out amount and the scattering distance fell within the suitable range and did not vary much between shaking-out operations. Furthermore, even repeated shaking-out operations did not cause the holes to be clogged, which means that high ease of handling was achieved. In Production Example 1 where the wheat flour had an angle of repose of less than 25 degrees, a large amount of the wheat flour was shaken out by one shaking-out operation, the scattering distance was large, and the distribution was not uniform. In Production Example 13 where the wheat flour had an angle of repose of more than 54 degrees, only a small amount of the wheat flour was shaken out by one shaking-out operation. In the case of the commercially-available wheat flour having the largest angle of repose, which was about 56.3 degrees, among all the samples, the holes were clogged at the first shaking-out operation, and any fraction of the wheat flour was not shaken out of the container.

### Test Example 2: Examination on shaker-type container

Shaker-packaged wheat flours were produced (Production Examples 14 to 26) in the same manner as in Production Example 6, except for varying the size of the shaker holes of the shaker-type container as shown in Table 2. The packaged wheat flours were evaluated for the shaken-out amount, scattering distance, and distribution uniformity in the same manner as in Test Example 1. The results are shown in Table 2. The result for Production Example 6 is also shown again in Table 2.

**[Table 2]**

| | Production Examples | | | | | | | | | | | | | |
|---|---|---|---|---|---|---|---|---|---|---|---|---|---|---|
| | 14 | 15 | 16 | 17 | 18 | 19 | 20 | 21 | 22 | 23 | 6 | 24 | 25 | 26 |
| Angle of repose (degrees) | 46.1 | 46.1 | 46.1 | 46.1 | 46.1 | 46.1 | 46.1 | 46.1 | 46.1 | 46.1 | 46.1 | 46.1 | 46.1 | 46.1 |
| Diameter of shaker holes (mm) | 1.5 | 2 | 3 | 4 | 12 | 20 | 21 | 5 | 5 | 5 | 5 | 5 | 5 | 5 |
| Number of shaker holes | 5 | 5 | 5 | 5 | 5 | 5 | 5 | 1 | 2 | 4 | 5 | 7 | 9 | 10 |
| Shaken-out amount (g) | 0.3 (C) | 0.7 (B) | 0.8 (A) | 0.8 (A) | 1.4 (A) | 2.0 (B) | 2.2 (C) | 0.5 (B) | 0.7 (B) | 0.9 (A) | 1.0 (A) | 1.4 (A) | 1.7 (B) | 2.0 (B) |
| Scattering distance (cm) | 8.5 (B) | 12.1 (A) | 13.0 (A) | 14.1 (A) | 16.3 (A) | 19.8 (A) | 25.2 (C) | 9.3 (B) | 10.3 (A) | 11.8 (A) | 12.7 (A) | 15.7 (A) | 18.4 (A) | 19.7 (A) |
| Distribution uniformity | B | A | A | A | A | B | B | A | A | A | A | A | A | B |

### Production Examples 14, 15, 19 - 21 and 26 are Comparative Examples.

As shown in Table 2, the shaken-out amount and scattering distance of the wheat flours were successfully adjusted to the suitable ranges by appropriately setting the size and number of the shaker holes.

## Claims

1. A container comprising packaged wheat flour, **characterized in that** the wheat flour is packed in the shaker-type container having 2 to 9 shaker holes having a maximum width of 3 to 12 mm, and the wheat flour has an angle of repose of 40 to 51 degrees and a mean particle diameter of 40 to 250 µm.

2. The container comprising packaged wheat flour according to claim 1, wherein the shaker-type container has 4 to 7 shaker holes.

3. The container comprising packaged wheat flour according to claim 1 or 2, wherein the wheat flour is a granulated wheat flour or a mixture of a granulated wheat flour and a non-granulated wheat flour.

4. The container comprising packaged wheat flour according to any one of claims 1 to 3, wherein the wheat flour is a soft wheat flour.

5. The container comprising packaged wheat flour according to any one of claims 1 to 4, wherein the wheat flour has a mean particle diameter of 40 to 200 µm.

6. A method of applying a wheat flour, comprising shaking out a wheat flour through shaker holes to apply the wheat flour to an object, **characterized in that** the wheat flour is packed in a shaker-type container having 2 to 9 shaker holes having a maximum width of 3 to 12 mm, and the wheat flour has an angle of repose of 40 to 51 degrees and a mean particle diameter of 40 to 250 µm.

7. A method of suppressing scattering and formation of lumps of a wheat flour, comprising shaking out a wheat flour through shaker holes to apply the wheat flour to an object, **characterized in that** the wheat flour is packed in a shaker-type container having 2 to 9 shaker holes having a maximum width of 3 to 12 mm, and the wheat flour has an angle of repose of 40 to 51 degrees and a mean particle diameter of 40 to 250 µm.

8. The method according to claim 6 or 7, wherein the wheat flour is a granulated wheat flour or a mixture of a granulated wheat flour and a non-granulated wheat flour.

9. The method according to any one of claims 6 to 8, wherein the wheat flour is a soft wheat flour.

10. The method according to any one of claims 6 to 9, wherein the wheat flour has a mean particle diameter of 40 to 200 µm.

## Patentansprüche

1. Behälter, umfassend verpacktes Weizenmehl, **dadurch gekennzeichnet, dass** das Weizenmehl in einem Streubehälter mit 2 bis 9 Löchern zum Bestreuen verpackt ist, die eine maximale Breite von 3 bis 12 mm aufweisen, und das Weizenmehl einen Schüttwinkel von 40 bis 51 Grad und einen mittleren Teilchendurchmesser von 40 bis 250 µm aufweist.

2. Behälter, umfassend verpacktes Weizenmehl nach Anspruch 1, wobei der Streubehälter 4 bis 7 Löcher zum Bestreuen aufweist.

3. Behälter, umfassend verpacktes Weizenmehl nach Anspruch 1 oder 2, wobei das Weizenmehl ein granuliertes Weizenmehl oder eine Mischung aus einem granulierten Weizenmehl und einem nicht granulierten Weizenmehl ist.

4. Behälter, umfassend verpacktes Weizenmehl nach einem der Ansprüche 1 bis 3, wobei das Weizenmehl ein Weichweizenmehl ist.

5. Behälter, umfassend verpacktes Weizenmehl nach einem der Ansprüche 1 bis 4, wobei das Weizenmehl einen mittleren Teilchendurchmesser von 40 bis 200 µm aufweist.

6. Verfahren zum Aufbringen von Weizenmehl, umfassend das Ausstreuen des Weizenmehls durch Löcher zum Betreuen, um das Weizenmehl auf einen Gegenstand aufzubringen, **dadurch gekennzeichnet, dass** das Weizenmehl in einem Streubehälter mit 2 bis 9 Löchern zum Betreuen verpackt ist, die eine maximale Breite von 3 bis 12 mm aufweisen, und das Weizenmehl einen Schüttwinkel von 40 bis 51 Grad und einen mittleren Teilchendurchmesser von 40 bis 250 µm aufweist.

7. Verfahren zum Unterdrücken des Verstreuens und der Bildung von Klumpen von Weizenmehl, umfassend das Ausstreuen eines Weizenmehls durch Löcher zum Betreuen, um das Weizenmehl auf einen Gegenstand aufzubringen, **dadurch gekennzeichnet, dass** das Weizenmehl in einem Streubehälter mit 2 bis 9 Löchern zum Bestreuen verpackt ist, die eine maximale Breite von 3 bis 12 mm aufweisen, und das Weizenmehl einen Schüttwinkel von 40 bis 51 Grad und einen mittleren Teilchendurchmesser von 40 bis 250 µm aufweist.

8. Verfahren nach Anspruch 6 oder 7, wobei das Weizenmehl ein granuliertes Weizenmehl oder eine Mischung aus einem granulierten Weizenmehl und einem nicht granulierten Weizenmehl ist.

9. Verfahren nach einem der Ansprüche 6 bis 8, wobei das Weizenmehl ein Weichweizenmehl ist.

10. Verfahren nach einem der Ansprüche 6 bis 9, wobei das Weizenmehl einen mittleren Teilchendurchmesser von 40 bis 200 µm aufweist.

## Revendications

1. Contenant comprenant une farine de blé conditionnée, **caractérisé en ce que** la farine de blé est emballée dans le contenant de type saupoudreuse ayant 2 à 9 trous de saupoudreuse ayant une largeur maximum de 3 à 12 mm, et la farine de blé a un angle de repos de 40 à 51 degrés et un diamètre de particule moyen de 40 à 250 µm.

2. Contenant comprenant une farine de blé conditionnée selon la revendication 1, dans lequel le contenant de type saupoudreuse a 4 à 7 trous de saupoudreuse.

3. Contenant comprenant une farine de blé conditionnée selon la revendication 1 ou 2, dans lequel la farine de blé est une farine de blé granulée ou un mélange d'une farine de blé granulée et d'une farine de blé non granulée.

4. Contenant comprenant une farine de blé conditionnée selon l'une quelconque des revendications 1 à 3, dans lequel la farine de blé est une farine de blé tendre.

5. Contenant comprenant une farine de blé conditionnée selon l'une quelconque des revendications 1 à 4, dans lequel la farine de blé a un diamètre de particule moyen de 40 à 200 µm.

6. Procédé d'application d'une farine de blé, comprenant saupoudrer d'une farine de blé à travers des trous de saupoudreuse pour appliquer la farine de blé sur un objet, **caractérisé en ce que** la farine de blé est emballée dans un contenant de type saupoudreuse ayant 2 à 9 trous de saupoudreuse ayant une largeur maximum de 3 à 12 mm, et la farine de blé a un angle de repos de 40 à 51 degrés et un diamètre de particule moyen de 40 à 250 µm.

7. Procédé de suppression de dispersion et de formation de grumeaux d'une farine de blé, comprenant saupoudrer d'une farine de blé à travers des trous de saupoudreuse pour appliquer la farine de blé sur un objet, **caractérisé en ce que** la farine de blé est emballée dans un contenant de type saupoudreuse ayant 2 à 9 trous de saupoudreuse ayant une largeur maximum de 3 à 12 mm, et la farine de blé a un angle de repos de 40 à 51 degrés et un diamètre de particule moyen de 40 à 250 µm.

8. Procédé selon la revendication 6 ou 7, dans lequel la farine de blé est une farine de blé granulée ou un mélange d'une farine de blé granulée et d'une farine de blé non granulée.

9. Procédé selon l'une quelconque des revendications 6 à 8, dans lequel la farine de blé est une farine de blé tendre.

10. Procédé selon l'une quelconque des revendications 6 à 9, dans lequel la farine de blé a un diamètre de particule moyen de 40 à 200 µm.
